(19) Europäisches Patentamt
European Patent Office
Office européen des brevets

(11) Publication number: 0 254 774 B1

(12) EUROPEAN PATENT SPECIFICATION

(45) Date of publication of the patent specification: 19.09.90

(51) Int. Cl.[5]: C02F 5/14

(21) Application number: 86201341.4

(22) Date of filing: 30.07.86

# (54) Method for controlling phosphonates tending to precipitate metal ions in water.

(43) Date of publication of application: 03.02.88 Bulletin 88/5

(45) Publication of the grant of the patent: 19.09.90 Bulletin 90/38

(84) Designated Contracting States: AT BE CH DE FR GB IT LI LU NL SE

(56) References cited:
EP-A- 0 142 929
GB-A- 1 519 512
US-A- 4 575 425

(73) Proprietor: DENAC N.V.,
Smallandlaan 1 - 3 Industriepark Hoboken,
B-2710 Antwerpen (Hoboken)(BE)

(72) Inventor: Thevissen, Peter, Mechelsesteenweg 693,
B-3020 Herent(BE)

(74) Representative: Pieraerts, Jacques et al, Bureau Gevers
S.A. rue de Livourne 7 bte 1, B-1050 Bruxelles(BE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 254 774 B1

ACTORUM AG

## Description

This invention relates to a method for controlling phosphonates which normally tend to precipitate with metal ions such as calcium and zinc in water treatment.

Until about 1980 no polymers or phosphonates were commercially available which could prevent calcium phosphate, zinc hydroxide and zinc phosphate deposit formation. Since 1980 many polymers have been developed and which also are able to prevent zinc hydroxide, zinc phosphate and calcium phosphate deposits. For example, European Patent Application 0 142 929 describes the use of acrylic acid-sulfonate ether copolymers as phosphate antiprecipitants.

As mentioned above, besides polymers, phosphonates are also used as antiprecipitants in substoechiometric amounts. The most widespread phosphonates are hydroxyethylidene diphosphonic acid and nitrilotrimethylenephosphonic acid. Phosphonates are also used as corrosion inhibitors. Using phosphonates as scale and corrosion inhibitors in water treatment has left some important problems. As is known from the literature, many of the commonly used phosphonates form insoluble phosphonate salts with cations, such as, for example, calcium and zinc.

The invention has for an object a new and original method for controlling such phosphonates in water treatment.

According to the invention, use is made of a copolymer containing at least the following monomeric units:

a) 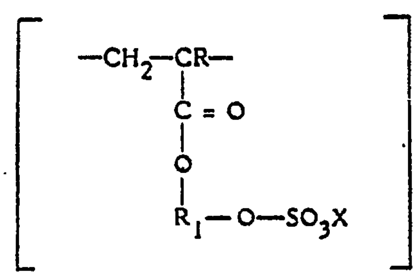

wherein R is hydrogen or alkyl,
$R_1$ is an alkyl group and
X is hydrogen, $NH_4^+$, a water soluble metal ion or an organic base which has accepted a proton;
b) a monocarboxylic acid monomer.

Still according to the invention, said monocarboxylic acid is acrylic acid or methacrylic acid.

Other features and advantages of the invention will appear from the description of same given hereinafter as a non limitative example.

It was discovered that when adding the new polymer according to the invention in combination with phosphonates which normally tend to precipitate out in high calcium containing water no precipitation of insoluble phosphonate compounds will occur. In addition the protection against corrosion will be remarkably improved.

The new polymers contain at least the following monomers:

a) 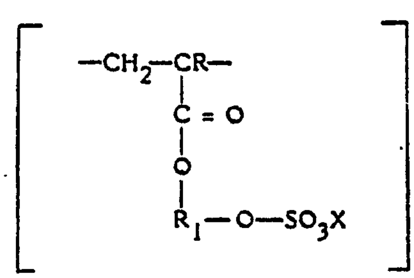

where R is hydrogen or alkyl; $R_1$ is an alkyl group and X is hydrogen $NH_4^+$, a water soluble metal ion or an organic base which has accepted a proton.

An example of this type of monomer is the sulfuric ester of 2-hydroxyethylmethacrylate (HEMA);

b) Monocarboxylic acid monomers: (examples are acrylic acid, methacrylic acid). These acids may be neutralized to the salt form with bases such as for example sodiumhydroxide, ammonia, organic bases as for example ethanolamine.

A part of these carboxylic acids may be replaced by other monomer units:
- dicarboxylic acids such as maleic acid or anhydride, itaconic acid;
- sulfonate containing monomers such as 2-acrylamido-2-methylpropylsulfonic acid, methallylsulfonic acid, vinylsulfonic acid...;
- hydroxycontaining monomers like 2-hydroxypropylacrylate, allylalcohol...;
- esters of the forementioned monomers, for example:
ethylacrylate, methylmethacrylate, the phosphate ester of hydroxyethylmethacrylate;
- phosphorus bearing monomers like vinylphosphonic acid, allylhydroxypropylphosphonate etc.;
- other copolymerisable units include acrylamide, acrylonitrile, vinylacetate, acroleine, cationic monomers.

The polymers may be produced, for example, by simple radicalar polymerisation techniques in water as a solvent. As initiators, use may be made of the common chemicals such as persulfate, hydrogen peroxide, benzoylperoxide. To regulate the chain length, well known materials such as sulfur bearing compounds e.g. mercaptoacetic acid, mercaptoethanol a.s.o. can be used. Other chain transfer agents are, for example, phosphorus bearing compounds such as $H_3PO_3$, $H_3PO_2$ and organic PH bearing compounds such as, for example, dialkylphosphite. Alcohols, for instance, isopropanol can also be used.

The molecular weight of the polymer may vary between about 500 to about 100,000 (about 1000 to 10.000 being preferred). The ratio of [a] to [b] monomers, as referred to above, may vary from 30:1 to 1:30 (30:1 to 1:2 being preferred).

The above described polymers demonstrate their phosphonate stabilising properties in the dose range of about 0,1 to 100 ppm; 1 to 20 ppm being preferred.

To control phosphonate deposits the forementioned polymers may be combined with other polymers. Examples of such polymers are:
- polymonocarboxylic acid, e.g. polyacrylic acid, phosphinocarboxylic acids;
- polydicarboxylic acids, e.g. polymaleic acid;
- polyacrylamide
- copolymers of monocarboxylic or dicarboxylic acids with other copolymerisable units, such as:
. sulfonate containing monomers, as for example, 2-acrylamido-2-methyl-propylsulfonic acid, methallylsulfonic acid, styrene sulfonic acid;
. hydroxycontaining monomers, such as 2-hydroxypropylacrylate, allyl-alcohol;
. esters of the forementioned carboxylic acids, such as ethylacrylate, methylmethacrylate etc....
. aldehyde containing monomers, e.g. acroleine;
. amides, e.g. acrylamide;
. phosphorusbearing monomers, such as vinylphosphonate, allylhydroxypropylphosphonate, hydroxyethylmethacrylate phosphate.

Also included in the copolymers are the copolymers bearing phosphine groups as mentioned in European Patent Application 0 150 706.
- Polysulfonic acids, such as polystyrenesulfonate.

This list of admixed polymers merely serves as an illustration and may in no case been interpreted as a limitation.

The following examples illustrate the merits of the invention:

10 ppm of different well known phosphonates are brought into contact with 400 ppm of calcium at a temperature of about 60° C during ± 30 minutes, at pH 9, eventually together with a polymer. After this period the turbidity of the sample is measured at 450 nm. The sample is then filtered over a millipore filter of 0,22 µm and the soluble phosphonate is determined.

**Table 1** : Stabilisation of different phosphonates at pH 9; TCa: 1000 ppm $CaCO_3$

| Phosphonate | Additive | Turbidity at 450nm | Soluble phosphonate (ppm as $PO_4^{3-}$) |
|---|---|---|---|
| 10 ppm nitrilotrimethylene phosphonic acid (NTMPA) | none | 0,019 | 3,82 |
| " | 10 ppm copolymer sulfuric acid ester of hydroxyethyleen-methacrylic acid (HEMA-S) 35 % - acrylic acid (AA) 65 % | 0,002 | 8 |
| " | 10 ppm polyacrylic acid | 0,017 | 4 |
| 10 ppm hydroxyethylidenediphosphonic acid (HEDP) | none | 0,020 | 3,6 |
| " | 10 ppm HEMA-S (35 %) - AA (65 %) | 0,002 | 8,2 |
| " | 10 ppm polyacrylic acid | 0,018 | 3,9 |
| 5 ppm HEDP- 5 ppm NTMPA | none | 0,019 | 4,01 |
| " | 10 ppm HEMA-S (35 %) - AA (65 %) | 0,002 | 9,04 |
| " | 10 ppm polyacrylic acid | 0,017 | 4,4 |

The same effects are observed when adding at pH 9 a supplement of zinc ions to the solution. This is demonstrated in the next table, where a supplement of 2 ppm zinc is added to the solution.

| Phosphonate | Additive | Turbidity | Soluble phosphonate (ppm as $PO_4^{3-}$) | Soluble zinc (ppmZn) |
|---|---|---|---|---|
| 10 ppm NTMPA | none | 0,005 | 8,72 | 0,58 |
| 10 ppm HEDP | none | 0,020 | 2,20 | 0,34 |
| 5 ppm HEDP<br>5 ppm NTMPA | none | 0,020 | 5,88 | 0,78 |
| 10 ppm NTMPA | copolymer HEMA-S-AA 5 ppm | 0,002 | 9,6 | 0,75 |
| 10 ppm HEDP | " | 0,010 | 3,22 | 0,69 |
| 5 ppm HEDP<br>5 ppm NTMPA | " | 0,003 | 8,5 | 1,16 |
| 10 ppm NTMPA | copolymer HEMA-S-AA 10 ppm | 0,002 | 8,80 | 0,56 |
| 10 ppm HEDP | " | 0,002 | 7,76 | 1,60 |
| 5 ppm HEDP<br>5 ppm NTMPA | " | 0,002 | 8,17 | 1,38 |

The HEMA-S-acrylic acid copolymer was also tested in a pilot cooling system under an all organic programm containing 3 ppm NTMPA, 2 ppm HEDP 2 ppm phosphonobutane - 1, 2, 4-tricarboxylic acid (PBTC). The water quality of the cooling water is indicated below:

pH : 8,6
TAC (ppm $CaCO_3$) : 500
TA (ppm $CaCO_3$) : 30
$Cl^-$ : 260 ppm
$SO_4^{2}$ : 240 ppm
TDS : 1500 $\mu$S $cm^{-1}$
TCa(ppm $CaCO_3$) : 500

The water temperature of the cooling water was about 50°C; the retention time of the cooling system was 3 days.

When using 5 ppm HEMA-S-acrylic acid copolymer as a polymer constituent, no phosphonate loss was observed during 7 days, while corrosion was completely under control.

Substituting the HEMA-S-acrylic acid copolymer for simple polyacrylic acid, the soluble phosphonate content dropped fast, heavy calciumphosphonate deposits resulted and under deposit corrosion took place. The difference in phosphonate solubility between the two treatments is given in figure 1.

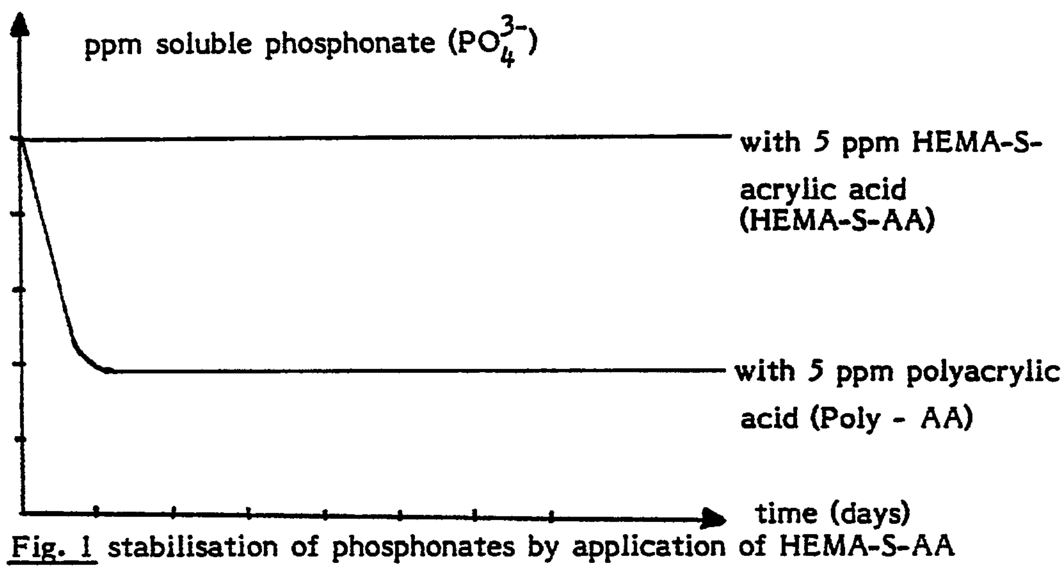


Fig. 1 stabilisation of phosphonates by application of HEMA-S-AA copolymer

In addition to the above set forth composition use can be made of other water treating chemicals such as:

- zinc, inorganic phosphorus compounds such as orthophosphate, polyphosphates, organic phosphonates which stay in solution at high calcium levels;
- iron complexing agents such as citric acid, gluconic acid;
- passive film forming agents such as mono or polycarboxylic long alifatic chain or cylloalifatic chain compounds such as oleic acids, $C_6$ - $C_{36}$ cycloalifatic di- and polycarboxylic acids;
- copper protecting chemicals such as benzotriazole, mercaptobenzothiazole, tolyltriazole;
- silicates.

Water to be treated accordirg to the invention is, for instance, cooling water, boiling water, water in water scrubber units, and so on.

## Claims

1. Method for controlling phosphonates which tend to precipitate with metal ions such as calcium and zinc in water treatment operations whereby use is made of a copolymer containing at least the following monomeric units:

a)

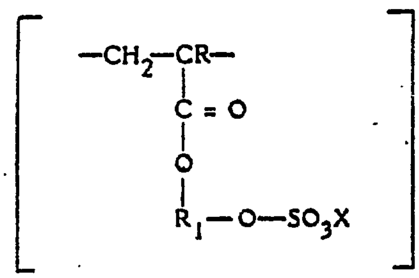

wherein R is hydrogen, or alkyl,
where $R_1$ is an alkyl group and
where X is hydrogen, $NH_4^+$, a water soluble metal ion or an organic base which has accepted a proton;
b) a monocarboxylic acid monomer.

2. Method according to claim 1, whereby the monomer referred to under a) is the sulfuric ester of 2-hydroxyethylmethacrylate.

3. Method according to eitherone of claims 1 - 2, whereby said carboxylic acid is acrylic acid.

4. Method according to eitherone of claims 1 - 2, whereby said carboxylic acid is methacrylic acid.

5. Method according to eitherone of claims 1 - 4, whereby said carboxylic acid is neutralized, e.g. by an inorganic or organic base.

6. Method according to eitherone of claims 1 - 5, whereby the monomeric unit referred to under point a) of claim 1 is a mixture of sulfate containing monomers.

7. Method according to eitherone of claims 1 - 6, whereby a part of said monocarboxylic acid is replaced by one of the following monomeric units:
- dicarboxylic acids;
- sulfonate containing monomers;
- hydroxycontaining monomers;
- esters of the forementioned carboxylic acids;
- phosphorus containing monomers;
- copolymerisable units including acrylamide, acrylonitrile, vinylacetate, acroleine.

8. Method according to eitherone of claims 1 to 7, whereby said polymer has a molecular weight of about 500 to about 100.000.

9. Method according to claim 8, whereby said molecular weight lies between 1000 and 10.000.

10. Method according to eitherone of claims 1 - 9, whereby the molar ratio between the monomers referred to under a) en b) varies between 30:1 to 1:30.

11. Method according to claim 10, whereby said molar ratio varies between 30:1 and 1:2.

12. Method according to eitherone of claims 1 - 11, whereby said polymer is added to the water to be treated in a concentration of about 0,1 ppm to 100 ppm.

13. Method according to claim 12, whereby said polymer is added to the water to be treated in a concentration of about 1 to about 20 ppm.

14. Method according to eitherone of the claims 1 to 13, whereby the above water treatment operations apply to one of the following applications:
- "cooling water treatment"
- "boiling water treatment"
- "sugar evaporation processes"
- "desalination processes"
- "water scrubber units"
- "secondary oil recovery"

**Patentansprüche**

1. Verfahren zur Verhütung von durch Phosphonate verursachten Niederschlägen von Metallionen, wie beispielsweise Kalzium und Zink, bei der Behandlung von Wasser, bei dem ein Mischpolymer mit zumindest den folgenden monomerischen Einheiten verwendet wird:

a) 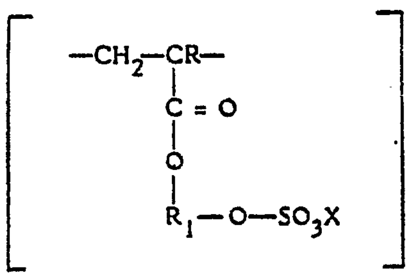

R steht hierbei für Wasserstoff oder Alkyl,
$R_1$ ist eine Alkylgruppe und
X ist Wasserstoff, $NH_4^+$, ein wasserlösliches Metallion oder eine organische Base, die ein Proton aufgenommen hat;
b) ein Monomer einer Monokarbonsäure.

2. Verfahren nach Anspruch 1, bei dem das unter a) erwähnte Monomer der Schwefelsäureester von 2-Hydroxy-äthylmethacrylat ist.

3. Verfahren nach einem der Ansprüche 1 bis 2, bei dem die Karbonsäure Acrylsäure ist.

4. Verfahren nach einem der Ansprüche 1 bis 2, bei dem die Karbonsäure Methacrylsäure ist.

5. Verfahren nach einem der Ansprüche 1 bis 4, bei dem die Karbonsäure, beispielsweise durch eine organische oder anorganische Base, neutralisiert wird.

6. Verfahren nach einem der Ansprüche 1 bis 5, bei dem die unter Punkt a) von Anspruch 1 erwähnte monomerische Einheit eine Mischung von sulfathaltigen Monomeren ist.

7. Verfahren nach einem der Ansprüche 1 bis 6, bei dem ein Teil der Monokarbonsäure durch eine der folgenden monomerischen Einheiten ersetzt wird:
- Dikarbonsäuren;
- sulfonathaltige Monomere;
- hydroxyhaltige Monomere;
- Ester der voranstehend aufgeführten Karbonsäuren;
- Phosphor-enthaltende Monomere;
- mischpolymerisierbare Einheiten einschließlich Acrylamid, Acrylsäurenitril, Vinylazetat, Akrolein.

8. Verfahren nach einem der Ansprüche 1 bis 7, bei dem das Polymer ein Molekulargewicht von ungefähr 500 bis 100 000 aufweist.

9. Verfahren nach Anspruch 8, bei dem das Molekulargewicht zwischen 1000 und 10 000 beträgt.

10. Verfahren nach einem der Ansprüche 1 bis 9, bei dem das unter a) und b) erwähnte Molverhältnis der Monomere zwischen 30:1 bis 1:30 schwankt.

11. Verfahren nach Anspruch 10, bei dem das Molverhältnis zwischen 30:1 und 1:2 schwankt.

12. Verfahren nach einem der Ansprüche 1 bis 11, bei dem das Polymer zur Behandlung dem Wasser in einer Konzentration von ca. 0,1 ppm bis 100 ppm zugefügt wird.

13. Verfahren nach Anspruch 12, bei dem das Polymer zur Behandlung dem Wasser in einer Konzentration von ungefähr 1 bis 20 ppm zugefügt wird.

14. Verfahren nach einem der Ansprüche 1 bis 13, bei dem die voranstehend erwähnten Wasserbehandlungsvorgänge eine der folgenden Anwendungen sind:
- "Kühlwasserbehandlung"
- "Siedewasserbehandlung"
- "Zuckereindampfungsverfahren"
- "Entsalzungsverfahren"
- "Wasserskrubbereinheiten"
- "Wiedergewinnung von Sekundäröl".

**Revendications**

1. Procédé pour contrôler les phosphonates qui ont tendance à précipiter avec des ions métalliques, tels que le calcium et le zinc dans les opérations de traitement de l'eau, consistant à utiliser un copolymère contenant au moins les unités monomères suivantes:

a) 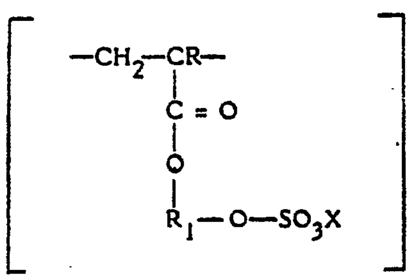

où R représente de l'hydrogène ou un groupe alkyle, $R_1$ représente un groupe alkyle et X représente de l'hydrogène, $NH_4^+$, un ion métallique soluble dans l'eau ou une base organique qui a accepté un proton;

b) un monomère d'acide monocarboxylique.

2. Procédé suivant la revendication 1, caractérisé en ce que le monomère dont question sous a) est l'ester sulfurique de 2-hydroxyéthylméthacrylate.

3. Procédé suivant l'une ou l'autre des revendications 1 et 2, caractérisé en ce que l'acide carboxylique est l'acide acrylique.

4. Procédé suivant l'une ou l'autre des revendications 1 et 2, caractérisé en ce que l'acide carboxylique est l'acide méthacrylique.

5. Procedé suivant l'une quelconque des revendications 1 à 4, caractérisé en ce que l'acide carboxylique est neutralisé, par exemple par une base inorganique ou organique.

6. Procédé suivant l'une quelconque des revendications 1 à 5, caractérisé en ce que l'unité monomère dont question sous le point a) de la revendication 1 est un mélange de monomères contenant du sulfate.

7. Procédé suivant l'une quelconque des revendications 1 à 6, caractérisé en ce qu'une partie de l'acide monocarboxylique est remplacée par l'une des unités monomères suivantes:

- acides dicarboxyliques;
- monomères contenant du sulfonate;
- monomères contenant de l'hydroxy;
- esters des acides carboxyliques susmentionnés;
- monomères contenant du phosphore;
- unités copolymérisables comprenant de l'acrylamide, de l'acrylonitrile, de l'acétate de vinyle, de l'acroléine.

8. Procédé suivant l'une quelconque des revendications 1 à 7, caractérisé en ce que le polymère a un poids moléculaire d'environ 500 à environ 100 000.

9. Procédé suivant la revendication 8, caractérisé en ce que le poids moléculaire se situe entre 1000 et 10 000.

10. Procédé suivant l'une quelconque des revendications 1 à 9, caractérisé en ce que le rapport molaire entre les monomères dont question sous a) et b) varie entre 30/1 et 1/30.

11. Procédé suivant la revendication 10, caractérisé en ce que le rapport molaire varie entre 30/1 et 1/2.

12. Procédé suivant l'une quelconque des revendications 1 à 11, caractérisé en ce que le polymère est ajouté à l'eau à traiter en une concentration d'environ 0,1 ppm à 100 ppm.

13. Procédé suivant la revendication 12, caractérisé en ce que le polymère est ajouté à l'eau à traiter en une concentration d'environ 1 à environ 20 ppm.

14. Procédé suivant l'une quelconque des revendications 1 à 13, caractérisé en ce que les opérations de traitement de l'eau s'appliquent à l'une des applications suivantes:

- "traitement de l'eau de refroidissement"
- "traitement de l'eau de chaudière"
- "procédés d'évaporation du sucre"
- "procédés de dessalement"
- "unités d'épuration à eau"
- "récupération d'huile secondaire".